(19) Europäisches Patentamt
European Patent Office
Office européen des brevets

(11) **EP 2 932 351 B1**

(12) **FASCICULE DE BREVET EUROPEEN**

(45) Date de publication et mention de la délivrance du brevet:
**07.09.2016 Bulletin 2016/36**

(21) Numéro de dépôt: **13802624.0**

(22) Date de dépôt: **09.12.2013**

(51) Int Cl.:
*G06F 3/01* (2006.01)    *G06F 3/0346* (2013.01)

(86) Numéro de dépôt international:
**PCT/EP2013/075984**

(87) Numéro de publication internationale:
**WO 2014/090754 (19.06.2014 Gazette 2014/25)**

(54) **DISPOSITIF ET PROCÉDÉ DE RECONNAISSANCE DE GESTES POUR UN CONTRÔLE D'INTERFACE UTILISATEUR**

**GESTENERKENNUNGSVORRICHTUNG UND -VERFAHREN ZUR BENUTZEROBERFLÄCHENSTEUERUNG**

**GESTURE RECOGNITION DEVICE AND METHOD FOR A USER INTERFACE CONTROL**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.12.2012 FR 1261939**

(43) Date de publication de la demande:
**21.10.2015 Bulletin 2015/43**

(73) Titulaire: **SAGEMCOM BROADBAND SAS**
**92500 Rueil Malmaison (FR)**

(72) Inventeurs:
• **EVRARD, Etienne**
**F-92500 Rueil Malmaison (FR)**
• **COLINET, Frédéric**
**F-92500 Rueil Malmaison (FR)**

(74) Mandataire: **Le Guen-Maillet**
**5, place de Newquay**
**BP 70250**
**35802 Dinard Cedex (FR)**

(56) Documents cités:
**US-A1- 2012 054 620     US-A1- 2012 272 194**

**Description**

La présente invention concerne une reconnaissance de gestes dans le cadre d'un contrôle d'interface utilisateur.

L'interaction avec une interface utilisateur d'un dispositif, notamment une interface graphique, s'effectue typiquement avec une télécommande ou une manette. Une telle télécommande ou manette dispose de boutons poussoirs destinés à l'envoi de commandes spécifiques et notamment à la navigation dans l'interface graphique, à la validation ou à l'annulation d'actions via l'interface graphique. Des telles télécommandes ou manettes sont parfois munies de gyroscopes et d'accéléromètres permettant à un utilisateur d'effectuer des gestes la télécommande en main, et ainsi de contrôler l'interface utilisateur du dispositif. L'interaction entre l'utilisateur et l'interface utilisateur s'en trouve améliorée.

Des systèmes permettant le contrôle par gestes reposent sur une transformation de données recueillies grâce au gyroscope et à l'accéléromètre de la télécommande en un système de pointage qui décrirait un tracé sur un écran, c'est-à-dire passer de six coordonnées inertielles (orientation du gyroscope selon trois axes et accélération selon trois axes) à des coordonnées cartésiennes sur un plan. Cependant, il ne suffit pas d'intégrer deux fois les données d'accélération pour obtenir la position de la télécommande, afin d'en faire un système de pointage correct. Il est aussi nécessaire de considérer les rotations de la télécommande et de transposer la position calculée dans un référentiel du monde de l'utilisateur. La mise en place de ce référentiel du monde de l'utilisateur est une contrainte forte qui implique une phase de calibration et de mesurer constamment les données du gyroscope et de l'accéléromètre pour déterminer à chaque instant l'orientation du repère de la télécommande et ainsi obtenir des mesures valides et lisses sans sauts désagréables du pointeur. Cette approche induit une latence de traitement perceptible pour l'utilisateur et un coût matériel élevé, et se passer de la définition d'un référentiel dans le monde de l'utilisateur induirait une dérive du système de pointage.

Il est souhaitable de pallier ces inconvénients de l'état de la technique en fournissant une solution qui permette de se passer de définir un référentiel dans le monde de l'utilisateur dans le cadre d'un contrôle par gestes d'une interface utilisateur d'un dispositif. Il est notamment souhaitable de fournir une telle solution qui soit adaptée à la navigation dans une interface graphique.

Il est aussi souhaitable de fournir une solution qui soit simple à mettre en oeuvre et à faible coût.

L'invention concerne un procédé de reconnaissance de gestes dans le cadre d'un contrôle d'interface utilisateur, ledit procédé étant mis en oeuvre par un dispositif de reconnaissance de gestes, le procédé comportant une étape de réception de données gyroscopiques représentatives d'un geste exécuté avec un instrument dédié comportant un capteur gyroscopique. Le procédé est tel qu'il comporte en outre les étapes suivantes : détermination d'une corrélation entre les données gyroscopiques reçues et des données gyroscopiques relatives à un apprentissage supervisé et préenregistrées dans une base de données; reconnaissance ou pas du geste exécuté en fonction de ladite corrélation, les seules données représentatives du geste exécuté prises en compte étant lesdites données gyroscopiques; transposition de chaque geste reconnu en une commande d'interface utilisateur. Ainsi, en ne cherchant à reconnaître le geste exécuté qu'à partir de données gyroscopiques, l'invention évite d'éviter de définir un référentiel dans le monde de l'utilisateur et de passer par une représentation de tracé du geste sur un plan, ce qui réduit considérablement la complexité de mise en oeuvre de la reconnaissance de gestes et augmente en conséquence la réactivité du contrôle de l'interface utilisateur.

Selon un mode de réalisation particulier, les données gyroscopiques reçues étant représentatives de mesures effectuées par le capteur gyroscopique entre deux actions détectées sur un bouton dudit instrument dédié, l'étape de réception de données gyroscopiques est suivie d'une étape de suppression d'un nombre prédéfini de données gyroscopiques de début des mesures et/ou d'un nombre prédéfini de données gyroscopiques de fin des mesures.

Selon un mode de réalisation particulier, le dispositif de reconnaissance de gestes comportant un réseau de neurones artificiels comportant des neurones de sortie associés respectivement aux gestes que ledit dispositif est adapté à reconnaître, l'étape de détermination de la corrélation est effectuée par le réseau de neurones artificiels.

Selon un mode de réalisation particulier, le réseau de neurones artificiels met en oeuvre une fonction d'activation de type sigmoïde et fournit, pour les données gyroscopiques reçues et pour chaque neurone de sortie, une probabilité que lesdites données gyroscopiques reçues correspondent au geste associé audit neurone de sortie.

Selon un mode de réalisation particulier, le procédé comporte une étape d'échantillonnage par suppression équirépartie ou conservation équirépartie de données gyroscopiques parmi les données gyroscopiques reçues.

Selon un mode de réalisation particulier, les données gyroscopiques relatives à l'apprentissage supervisé et préenregistrées dans la base de données correspondent à l'ensemble de gestes suivants : un geste horizontal vers la droite; un geste horizontal vers la gauche; un geste vertical vers le haut; un geste vertical vers le bas.

Selon un mode de réalisation particulier, les données gyroscopiques reçues étant représentatives de mesures effectuées par le capteur gyroscopique selon trois axes d'un référentiel inertiel, le procédé comporte une étape de normalisation des données gyroscopiques reçues de telle sorte que : pour chaque donnée gyroscopique d'origine définie par rapport à un axe donné, la donnée gyroscopique normalisée est égale à ladite donnée gyroscopique d'origine moins la valeur minimale de l'ensemble des données gyroscopiques d'origine définies par rapport audit axe donné, le tout divisé par la valeur minimale de l'ensemble des données gyroscopiques d'origine définies par rapport audit axe donné moins la valeur minimale de l'ensemble des données gyroscopiques d'origine définies par rapport audit axe donné.

Selon un mode de réalisation particulier, l'ensemble de gestes comporte en outre : un geste correspondant à la reproduction de la lettre « V » ; un geste circulaire en partant d'une position haute et en démarrant la rotation vers la gauche.

Selon un mode de réalisation particulier, les données gyroscopiques reçues étant représentatives de mesures effectuées par le capteur gyroscopique selon trois axes d'un référentiel inertiel, le procédé comporte une étape de normalisation des données gyroscopiques reçues de telle sorte que : pour chaque donnée gyroscopique d'origine définie par rapport à un axe donné, la donnée gyroscopique normalisée est égale à ladite donnée gyroscopique d'origine moins la moyenne de l'ensemble des données gyroscopiques d'origine définies par rapport audit axe donné, le tout divisé par l'écart-type de l'ensemble des données gyroscopiques d'origine définies par rapport audit axe donné.

L'invention concerne également un dispositif de reconnaissance de gestes comportant des moyens de réception de données gyroscopiques représentatives d'un geste exécuté avec un instrument dédié comportant un capteur gyroscopique. Le dispositif est tel qu'il comporte en outre : des moyens de détermination d'une corrélation entre les données gyroscopiques reçues et des données gyroscopiques relatives à un apprentissage supervisé et préenregistrées dans une base de données; des moyens de reconnaissance ou pas du geste exécuté en fonction de ladite corrélation, les seules données représentatives du geste exécuté prises en compte étant lesdites données gyroscopiques; des moyens de transposition de chaque geste reconnu en une commande d'interface utilisateur.

L'invention concerne également un programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus dans n'importe laquelle de ses variantes, lorsque ledit programme est exécuté par le processeur. L'invention concerne également des moyens de stockage comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la Fig. 1 illustre schématiquement un système dans lequel la présente invention peut être mise en oeuvre;
- la Fig. 2 illustre schématiquement un exemple de découpe modulaire d'au moins une partie du dispositif de reconnaissance de gestes ;
- la Fig. 3 illustre schématiquement un exemple d'architecture matérielle d'un dispositif de reconnaissance de gestes du système de communication ;
- la Fig. 4 illustre schématiquement un ensemble de gestes à reconnaître ;
- la Fig. 5 illustre schématiquement un algorithme de reconnaissance de gestes.

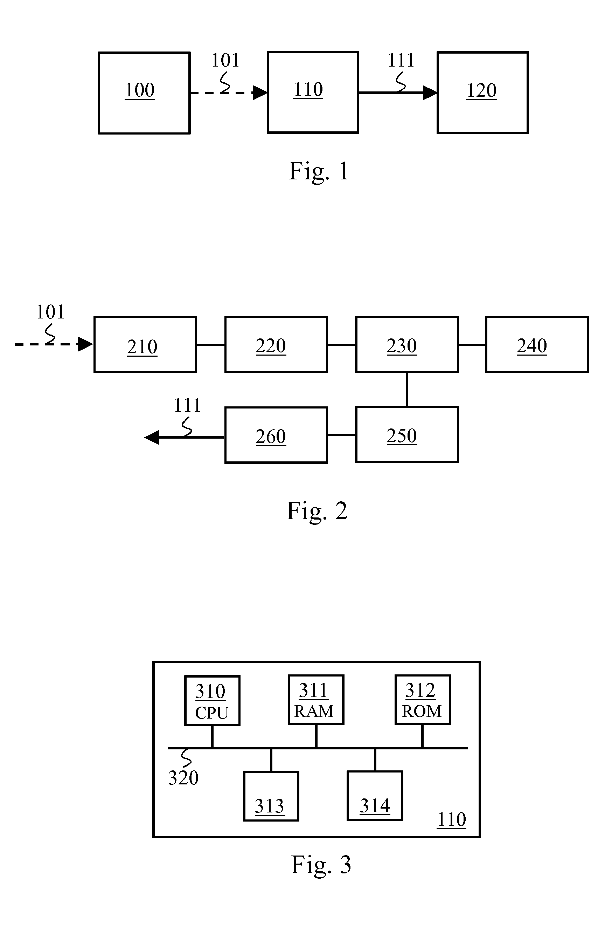

La Fig. 1 illustre schématiquement un système dans lequel la présente invention peut être mise en oeuvre.

Le système de la Fig. 1 comporte une télécommande 100, parfois aussi appelée *manette,* dotée d'un capteur gyroscopique permettant de collecter des données gyroscopiques quant à la position angulaire de la télécommande 100 selon trois axes de son référentiel par rapport à un référentiel inertiel. Les données gyroscopiques sont ainsi représentatives de mouvements exercés sur la télécommande 100 par un utilisateur, c'est-à-dire de gestes effectués par l'utilisateur la télécommande 100 en main. D'une manière générale, la télécommande 100 est un instrument dédié comportant un capteur gyroscopique adapté pour fournir des données gyroscopiques représentatives de gestes exécutés avec l'instrument dédié.

La télécommande 100 peut ainsi comporter un accéléromètre, c'est-à-dire un capteur adapté pour collecter des données d'accélération linéaire des mouvements exercés sur la télécommande 100 par l'utilisateur. Comme on le verra par la suite, seules les données gyroscopiques sont utilisées pour effectuer la reconnaissance de mouvements. Il est toutefois possible de mettre en oeuvre dans le système de la Fig. 1 une télécommande, disponible sur étagère, disposant d'un accéléromètre et d'un gyroscope, et d'effectuer la reconnaissance de gestes uniquement sur des mesures effectuées à l'aide du gyroscope.

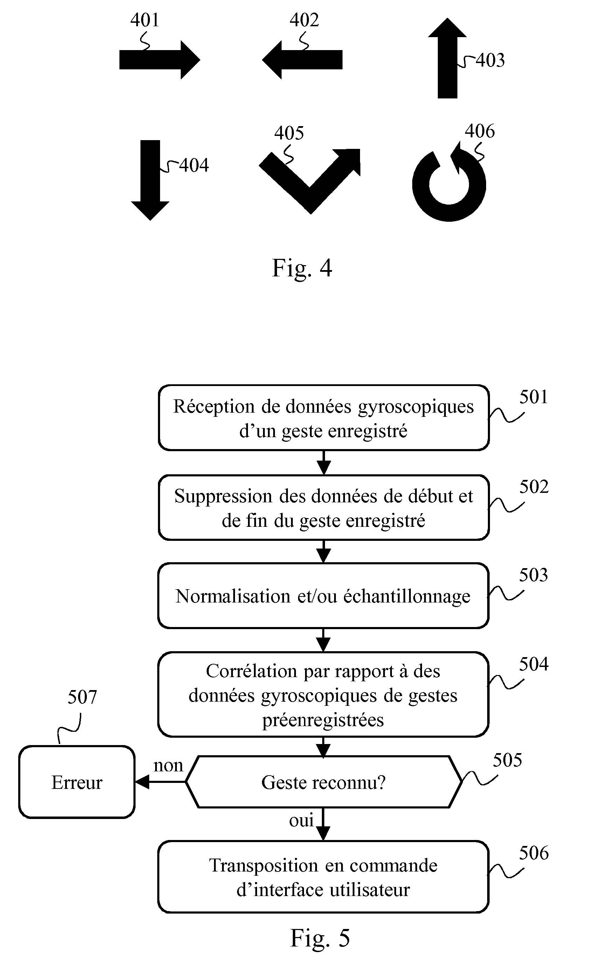

Le système de la Fig. 1 comporte en outre un dispositif de reconnaissance de gestes 110. Un exemple de découpe modulaire d'au moins une partie du dispositif de reconnaissance de gestes 110 est détaillé ci-après en relation avec la Fig. 2, et le fonctionnement du dispositif de reconnaissance de gestes 110 est détaillé ci-après en relation avec la Fig. 5. Le dispositif de reconnaissance de gestes 110 peut être intégré dans un boîtier décodeur (« set-top box » en anglais) ou tout autre appareil que l'on souhaite contrôler par gestes.

La télécommande 100 et le dispositif de reconnaissance de gestes 110 sont interconnectés par un premier lien 101. Le premier lien 101 est préférentiellement un lien radio sans-fil, mais peut en variante être un lien filaire. Le premier lien 101 est adapté pour permettre à la télécommande 100 de transmettre au dispositif de reconnaissance de gestes 110 au moins les données gyroscopiques. Les données gyroscopiques sont fournies sous forme d'échantillons correspondant respectivement à des mesures à intervalles réguliers du capteur gyroscopique selon les trois axes du référentiel inertiel.

Le système de la Fig. 1 comporte en outre un écran 120 interconnecté au dispositif de reconnaissance de gestes 110 par un second lien 111. Par exemple, le second lien 111 est de type HDMI (« High-Définition Multimédia Interface » en anglais). L'écran 120 est alors adapté pour afficher une interface graphique GUI (« Graphical User Interface » en anglais) d'après des données transmises par le dispositif de reconnaissance de gestes 110 via le second lien 111. L'interface graphique GUI est alors contrôlée par l'utilisateur à l'aide de gestes effectués la télécommande 100 en main grâce au dispositif de reconnaissance de gestes 110.

La télécommande 100 comporte préférentiellement un bouton de commande, tel qu'un bouton poussoir ou un capteur de pression adapté pour détecter la pression exercée par le doigt de l'utilisateur sur le capteur. L'utilisateur effectue alors une première action sur le bouton pour indiquer le début d'un geste de commande de l'interface graphique GUI et une seconde action sur le bouton pour indiquer la fin du geste de commande de l'interface graphique GUI. Par exemple, la première action est un appui sur le bouton suivi d'un relâchement du bouton, et la seconde action est un appui consécutif sur le bouton suivi d'un relâchement du bouton. Selon un autre exemple, la première action est un appui sur le bouton, et la seconde action est un relâchement du bouton, l'appui sur le bouton étant maintenu pendant l'exécution du geste. Ces actions délimitent alors le geste à reconnaître par le dispositif de reconnaissance de gestes 110. Soit la télécommande 100 transmet les données gyroscopiques relatives à tout mouvement exercé avec la télécommande 100 ainsi que des indications représentatives des actions exercées sur le bouton de sorte que le dispositif de reconnaissance de gestes 110 puisse délimiter les données gyroscopiques relatives à des gestes à reconnaître parmi tous les gestes effectués par l'utilisateur la télécommande en main, soit la télécommande 100 transmet les données gyroscopiques relatives à tout mouvement exercé avec la télécommande entre une action sur le bouton marquant le début d'un geste à reconnaître et une action correspondante sur le bouton marquant la fin d'un geste à reconnaître.

Pour permettre de naviguer dans l'interface graphique GUI, peu de gestes devant être reconnus par le dispositif de reconnaissance de gestes 110 sont nécessaires. Un exemple de tels gestes est décrit ci-après en relation avec la Fig. 4.

La Fig. 2 illustre schématiquement un exemple de découpe modulaire d'au moins une partie du dispositif de reconnaissance de gestes 110. Cette découpe modulaire peut correspondre à une mise en oeuvre matérielle, par exemple à l'aide de composants FPGA (« Field-Programmable Gate Array » en anglais) ou ASIC (« Application-Specific Integrated Circuit » en anglais), ou à une architecture logicielle.

Le dispositif de reconnaissance de gestes 110 comporte un module 210 de réception de signaux via le premier lien 101, les signaux reçus transportant les données gyroscopiques représentatives de gestes effectués par l'utilisateur la télécommande 100 en main. Comme déjà mentionné, les signaux reçus peuvent aussi transporter des indications représentatives d'actions exercées sur un bouton de la télécommande 100. Le module 210 de réception de signaux est alors en charge de trier les données reçues via lesdits signaux et d'extraire les données gyroscopiques sur la base desquelles le dispositif de reconnaissance de gestes 110 doit effectuer la reconnaissance de gestes.

Le dispositif de reconnaissance de gestes 110 comporte préférentiellement un module 220 de normalisation et d'échantillonnage des données gyroscopiques sur la base desquelles le dispositif de reconnaissance de gestes 110 doit effectuer la reconnaissance de gestes. Le comportement du module 220 de normalisation et d'échantillonnage est décrit ci-après en relation avec la Fig. 5.

Le dispositif de reconnaissance de gestes 110 comporte en outre une base de données 240 stockant des données gyroscopiques représentatives de mouvements de la télécommande 100 correspondant aux gestes à reconnaître. Les données gyroscopiques préenregistrées dans la base de données 240 résultent d'un apprentissage supervisé des gestes à reconnaître. Le dispositif de reconnaissance de gestes 110 comporte aussi un module 230 de détermination de corrélation entre les données gyroscopiques fournies par le module 210 de réception de signaux et des données gyroscopiques obtenues par apprentissage supervisé, c'est-à-dire celles stockées dans la base de données 240.

Selon un mode de réalisation préférentiel, le module 230 de détermination de corrélation est un réseau de neurones artificiels. Le réseau de neurones artificiels comporte un nombre de neurones de sortie égal au nombre de gestes que le dispositif de reconnaissance de gestes 110 doit être capable de reconnaître. Le nombre de neurones d'entrée est égal au nombre d'échantillons de données gyroscopiques à prendre en considération pour reconnaître le geste exécuté par l'utilisateur multiplié par le nombre d'axes du référentiel inertiel (une donnée gyroscopique pour chacun des trois axes du référentiel inertiel), les échantillons d'un geste étant injectés dans les neurones d'entrée respectifs. Le réseau de neurones artificiels comporte un nombre de neurones d'entrée et un nombre de couches intermédiaires, appelées aussi *couches cachées,* définis empiriquement. Le réseau de neurones artificiels met en oeuvre une fonction d'activation de type sigmoïde, permettant pour chacun des neurones de sortie de fournir une probabilité que le geste associé soit celui qui correspond aux données gyroscopiques fournies aux neurones d'entrée. Lorsque l'une de ces probabilités est supérieure à un seuil prédéfini, le geste correspondant est considéré comme reconnu.

Dans le cadre d'une mise en oeuvre logicielle, le réseau de neurones artificiels peut être mis en oeuvre grâce à la librairie FANN (« Fast Artificial Neural Network » en anglais) créée par Steffen Nissen.

Selon un autre mode de réalisation, le module 230 de détermination de corrélation est une machine à vecteurs de support SVM (« Support Vector Machine » en anglais), aussi appelé *séparateur à vaste marge.* Comme pour le réseau de neurones artificiels, la machine à vecteurs de support SVM repose sur un apprentissage supervisé et permet de résoudre des problèmes de discrimination et de classification.

La construction de la base de données 240 est effectuée par apprentissage. Cela peut être effectué en laboratoire en amont de la fabrication du dispositif de reconnaissance de gestes 110. Un panel d'utilisateurs exécute alors, à l'aide de la télécommande 100, les gestes à reconnaître de manière à peupler la base de données 240 de données gyroscopiques correspondant à ces gestes. Le fait de peupler la base de données 240 de données gyroscopiques issues de gestes exécutés plusieurs fois par différents utilisateurs permet d'augmenter la fiabilité de la reconnaissance de gestes. En effet, un même geste peut être exécuté de différentes manières par différentes personnes et même par une même personne.

Le dispositif de reconnaissance de gestes 110 comporte en outre un module 250 de transposition en commandes d'interface utilisateur. Le module 250 de transposition en commandes d'interface utilisateur est adapté pour recevoir du module 230 de détermination de corrélation une indication d'un geste reconnu à partir des données gyroscopiques reçues de la télécommande 100. Le module 250 de transposition en commandes d'interface utilisateur est adapté pour transposer l'indication de geste reconnu en une commande correspondante d'interface utilisateur.

Le dispositif de reconnaissance de gestes 110 comporte en outre un module 260 de gestion d'interface utilisateur. Le module 260 de gestion d'interface utilisateur est adapté pour recevoir, en provenance du module 250 de transposition, des commandes d'interface utilisateur. Le module 260 de gestion d'interface utilisateur est en charge de faire appliquer à l'interface utilisateur la commande résultant du geste exécuté par l'utilisateur et reconnu par le dispositif de reconnaissance de gestes 110. Dans le cadre d'une navigation dans une interface graphique GUI, le module 260 de gestion d'interface utilisateur est en charge de déplacer un curseur, éventuellement d'effectuer des validations et des annulations en fonction des gestes exécutés par l'utilisateur et reconnus par le dispositif de reconnaissance de gestes 110. Le module 260 de gestion d'interface utilisateur adapte donc le rendu de l'interface graphique GUI et transmet via le second lien 111 des données représentatives du changement de rendu de l'interface graphique GUI, afin que l'affichage par l'écran 120 soit mis à jour en conséquence.

Lorsque l'interface graphique GUI repose sur une mise en oeuvre de navigateur web (« web browser » en anglais), le module 250 de transposition en commandes d'interface utilisateur traduit préférentiellement le geste reconnu en caractères correspondant à des touches de clavier d'ordinateur.

La Fig. 3 illustre schématiquement un exemple d'architecture matérielle du dispositif de reconnaissance de gestes 110.

Le dispositif de reconnaissance de gestes 110 comporte alors, reliés par un bus de communication 320 : un processeur ou CPU (« Central Processing Unit » en anglais) 310 ; une mémoire vive RAM (« Random Access Memory » en anglais) 311 ; une mémoire morte ROM (« Read Only Memory» en anglais) 312 ; une unité de stockage ou un lecteur de support de stockage, tel qu'un lecteur de cartes SD (« Secure Digital » en anglais) ou un disque dur HDD (« Hard Disk Drive » en anglais) 313 ; et un ensemble d'interfaces 314 permettant de recevoir des données via le premier lien 101 et de transmettre des données via le second lien 111.

Le processeur 310 est capable d'exécuter des instructions chargées dans la RAM 311 à partir de la ROM 312, d'une mémoire externe (non représentée), d'un support de stockage, ou d'un réseau de communication. Lorsque le dispositif de reconnaissance de gestes 110 est mis sous tension, le processeur 310 est capable de lire de la RAM 311 des instructions et de les exécuter. Ces instructions forment un programme d'ordinateur causant la mise en oeuvre, par le processeur 310, de tout ou partie des modules déjà décrits en relation avec la Fig. 2, ainsi que des algorithmes et des étapes décrits ci-après.

Ainsi, tout ou partie de ces modules, algorithmes et étapes peut être implémenté sous forme logicielle par exécution d'un ensemble d'instructions par une machine programmable, tel qu'un DSP (« Digital Signal Processor » en anglais) ou un microcontrôleur. Tout ou partie de ces modules, algorithmes et étapes peut aussi être implémenté sous forme matérielle par une machine ou un composant dédié, tel qu'un FPGA ou un ASIC.

La Fig. 4 illustre schématiquement un ensemble de gestes à reconnaître, particulièrement adapté à la navigation dans une interface graphique GUI. Les données gyroscopiques résultant de l'apprentissage supervisé de ces gestes sont stockées dans la base de données 240, et l'utilisateur peut contrôler l'interface utilisateur en exécutant ces gestes avec la télécommande 100.

Un premier geste 401 correspond au déplacement horizontal de la télécommande 100 vers la droite. Le premier geste 401 est particulièrement adapté au déplacement d'un curseur vers la droite dans l'interface graphique GUI.

Un second geste 402 correspond au déplacement horizontal de la télécommande 100 vers la gauche. Le second geste 402 est particulièrement adapté au déplacement du curseur vers la gauche dans l'interface graphique GUI.

Un troisième geste 403 correspond au déplacement vertical de la télécommande 100 vers le haut. Le troisième geste 403 est particulièrement adapté au déplacement du curseur vers le haut dans l'interface graphique GUI.

Un quatrième geste 404 correspond au déplacement vertical de la télécommande 100 vers le bas. Le quatrième geste 403 est particulièrement adapté au déplacement du curseur vers le bas dans l'interface graphique GUI.

Ainsi, lorsque le dispositif de reconnaissance de gestes 110 est adapté pour reconnaître au moins les premier 401, second 402, troisième 403 et quatrième 404 gestes, il est alors aisé pour l'utilisateur de déplacer un curseur dans une interface graphique GUI.

L'ensemble formé par les premier 401, second 402, troisième 403 et quatrième 404 gestes peut être augmenté d'un cinquième geste 405. Le cinquième geste 405 correspond à la reproduction de la lettre « V » à l'aide de la télécommande, ce qui correspond à un *tick* dans la symbolique anglo-saxonne, c'est-à-dire une coche. Le cinquième geste 405 est particulièrement adapté à une action de validation dans l'interface graphique GUI.

L'ensemble formé par les premier 401, second 402, troisième 403 et quatrième 404 gestes, et éventuellement le cinquième geste 405, peut être augmenté d'un sixième geste 406. Le sixième geste 406 correspond au déplacement circulaire de la télécommande 100, en partant d'une position haute et en démarrant la rotation vers la gauche. Le sixième geste 406 est particulièrement adapté à une action d'annulation dans l'interface graphique GUI.

Les premier 401, second 402, troisième 403, quatrième 404, cinquième 405 et sixième 406 gestes décrits ci-dessus engendrent des données gyroscopiques suffisamment distinctes pour permettre au réseau de neurones artificiels ou à la machine à vecteurs de support SVM de réaliser une classification sans avoir recours à des données d'accélération.

L'ensemble des gestes que le dispositif de reconnaissance de gestes 110 est adapté à reconnaître peut être enrichi d'autres gestes. L'ensemble des gestes que le dispositif de reconnaissance de gestes 110 est adapté à reconnaître peut être composé d'un tout autre ensemble de gestes, ou d'un ensemble de gestes comportant un sous-ensemble des gestes décrits ci-dessus, éventuellement augmenté d'autres gestes.

La Fig. 5 illustre schématiquement un algorithme de reconnaissance de gestes, mis en oeuvre par le dispositif de reconnaissance de gestes 110.

Dans une étape 501, le dispositif de reconnaissance de gestes 110 reçoit des données gyroscopiques d'un geste enregistré par la télécommande 100.

Dans une étape 502 suivante, préférentiellement, le dispositif de reconnaissance de gestes 110 supprime des données de début et/ou de fin du geste enregistré. En effet, lorsque l'utilisateur effectue le geste à reconnaître, la trajectoire de la télécommande peut ne pas être stable au début et/ou à la fin du geste. Cela dépend si l'utilisateur effectue l'action sur le bouton pour indiquer le début du geste avant ou après avoir effectivement débuté le geste, et si l'utilisateur effectue l'action sur le bouton pour indiquer la fin du geste avant ou après avoir effectivement terminé le geste. Pour ce faire, lorsque les données gyroscopiques sont reçues sous la forme de trames successives, chacune incluant un échantillon de données gyroscopiques, le dispositif de reconnaissance de gestes 110 supprime un nombre prédéfini N1 de trames de début et/ou un nombre prédéfini N2 de trames de fin, que N1 soit égal ou pas à N2. Les nombres N1 et N2 sont définis de manière empirique.

Dans une étape 503 suivante, préférentiellement lorsque le dispositif de reconnaissance de gestes 110 comporte le réseau de neurones artificiels, le dispositif de reconnaissance de gestes 110 effectue une étape de normalisation des données gyroscopiques. Cela permet au réseau de neurones artificiels de ne pas tomber dans un minimum local, en ramenant les données gyroscopiques dans un domaine de valeurs plus dense que l'original.

Selon un premier mode de réalisation, la normalisation des données est réalisée à l'aide de la formule suivante :

$$z_1^i = \frac{x_i - min(X)}{max(X) - min(X)}$$

où :

- $x_i$ représente chaque donnée gyroscopique selon chacun des trois axes susmentionnés ;

- $z_1^i$ représente le résultat de la normalisation de la donnée $x_i$ selon le premier mode de réalisation ;

- $min(X)$ représente la valeur minimale de la population, pour le geste à reconnaître, de données gyroscopiques sur l'axe considéré par $x_i$; et

- $max(X)$ représente la valeur maximale de la population, pour le geste à reconnaître, de données gyroscopiques sur l'axe considéré par $x_i$.

En d'autres termes, pour une donnée gyroscopique d'origine obtenue par rapport à un axe donné, la donnée gyroscopique normalisée est égale à la donnée gyroscopique d'origine moins la valeur minimale de l'ensemble des données gyroscopiques d'origine obtenues par rapport audit axe donné, le tout divisé par la valeur minimale de l'ensemble des données gyroscopiques d'origine obtenues par rapport audit axe donné moins la valeur minimale de l'ensemble des données gyroscopiques d'origine obtenues par rapport audit axe donné.

La normalisation appliquée dans le cadre du premier mode de réalisation est particulièrement adaptée à la discrimination des premier 401, second 402, troisième 403 et quatrième 404 gestes, c'est-à-dire ceux relatifs au déplacement de curseur dans l'interface graphique GUI.

Selon un second mode de réalisation, la normalisation des données est réalisée à l'aide de la formule suivante :

$$z_2^i = \frac{x_i - \overline{X}}{\sigma_X}$$

où :

- $z_2^i$ représente le résultat de la normalisation de la donnée $x_i$ selon le second mode de réalisation ;
- $\overline{X}$ représente la valeur moyenne de la population, pour le geste à reconnaître, de données gyroscopiques sur l'axe considéré par $x_i$ ;
- $\sigma_X$ représente l'écart-type de la population, pour le geste à reconnaître, de données gyroscopiques sur l'axe considéré par $x_i$.

En d'autres termes, pour une donnée gyroscopique d'origine obtenue par rapport à un axe donné, la donnée gyroscopique normalisée est égale à la donnée gyroscopique d'origine moins la moyenne de l'ensemble des données gyroscopiques d'origine obtenues par rapport audit axe donné, le tout divisé par l'écart-type de l'ensemble des données gyroscopiques d'origine obtenues par rapport audit axe donné.

La normalisation appliquée dans le cadre du second mode de réalisation est généralement appelée opération de centrage et de réduction. Elle est plus performante que celle du premier mode de réalisation car moins sensible aux valeurs extrêmes.

La normalisation appliquée dans le cadre du second mode de réalisation est particulièrement adaptée à la discrimination des premier 401, second 402, troisième 403, quatrième 404, cinquième 405 et sixième 406 gestes, c'est-à-dire ceux relatifs au déplacement de curseur, à la validation et à l'annulation dans l'interface graphique GUI.

La normalisation permet d'effectuer un changement d'unité pour densifier le domaine de valeurs, sans incidence sur les profils de variations, c'est-à-dire que les variations des données gyroscopiques d'origine se retrouveront dans les données gyroscopiques normalisées. De plus, la corrélation entre données gyroscopiques d'origine est conservée dans le domaine de valeurs des données gyroscopiques normalisées.

Dans l'étape 503, préférentiellement lorsque le dispositif de reconnaissance de gestes 110 comporte le réseau de neurones artificiels, le dispositif de reconnaissance de gestes 110 effectue une étape d'échantillonnage des données gyroscopiques. Cette étape d'échantillonnage peut être mise en oeuvre avant ou après l'étape de normalisation, préférentiellement avant. L'étape d'échantillonnage consiste à ne conserver qu'un nombre de données gyroscopiques égal au nombre de neurones d'entrée du réseau de neurones artificiels. Par exemple, l'échantillonnage peut être mis en oeuvre par suppression équirépartie sur l'ensemble des données gyroscopiques pour le geste considéré, ou par conservation équirépartie sur l'ensemble des données gyroscopiques pour le geste considéré.

Dans une étape 504 suivante, le dispositif de reconnaissance de gestes 110 détermine une corrélation entre les données gyroscopiques, éventuellement normalisées et/ou échantillonnées, reçues de la télécommande 100 et les données gyroscopiques résultant de l'apprentissage supervisé. En d'autres termes, selon les modes de réalisation précédemment décrits, le dispositif de reconnaissance de gestes 110 injecte dans le réseau de neurones artificiels ou dans la machine à vecteurs de support SVM les données gyroscopiques, éventuellement normalisées et/ou échantillonnées, reçues de la télécommande 100. Ainsi, les seules données représentatives du geste exécuté prises en compte sont lesdites données gyroscopiques. En effet, il a été constaté que, pour de nombreux gestes et tout particulièrement pour les gestes représentés schématiquement à la Fig. 4, des données d'accélération ne seraient pas discriminantes. L'invention permet ainsi d'éviter de définir un référentiel dans le monde de l'utilisateur et de passer par une représentation de tracé du geste sur un plan, ce qui réduit considérablement la complexité de mise en oeuvre de la reconnaissance de gestes et augmente en conséquence la réactivité du contrôle de l'interface utilisateur.

Dans une étape 505 suivante, le dispositif de reconnaissance de gestes 110 détermine si le geste exécuté par l'utilisateur est reconnu. Si tel est le cas, une étape 506 est effectuée; sinon, une étape 507 est effectuée. Dans le cas du réseau de neurones artificiels, le dispositif de reconnaissance de gestes 110 détermine si l'une des probabilités fournies par les neurones de sortie est supérieure à un seuil prédéfini. Si tel est le cas, le geste représenté par le neurone de sortie considéré est reconnu.

Dans l'étape 506, le dispositif de reconnaissance de gestes 110 transpose le geste reconnu en une commande de contrôle de l'interface utilisateur, comme par exemple une commande de navigation dans l'interface graphique GUI.

Dans l'étape 507, le dispositif de reconnaissance de gestes 110 entre dans un état d'erreur, le geste exécuté par l'utilisateur n'étant pas reconnu. Le dispositif de reconnaissance de gestes 110 peut soit ne rien faire, soit fournir à l'utilisateur un retour visuel ou sonore représentatif d'un échec de la reconnaissance de gestes, l'incitant ainsi à renouveler son geste.

**Revendications**

**1.** Procédé de reconnaissance de gestes dans le cadre d'un contrôle d'interface utilisateur, ledit procédé étant mis en oeuvre par un dispositif de reconnaissance de gestes (110), le procédé comportant une étape de réception (501) de données gyroscopiques représentatives d'un geste exécuté avec un instrument dédié (100) comportant un capteur gyroscopique, **caractérisé en ce que** le dispositif de reconnaissance de gestes inclut un réseau de neurones artificiels comportant des neurones de sortie associés respectivement aux gestes que ledit dispositif est adapté à reconnaître, et **en ce que** le procédé comporte en outre les étapes suivantes :

- détermination, par le réseau de neurones artificiels, d'une corrélation (504) entre les données gyroscopiques reçues et des données gyroscopiques relatives à un apprentissage supervisé et préenregistrées dans une base de données, le réseau de neurones artificiels mettant en oeuvre une fonction d'activation de type sigmoïde et fournissant, pour les données gyroscopiques reçues et pour chaque neurone de sortie, une probabilité que lesdites données gyroscopiques reçues correspondent au geste associé audit neurone de sortie;
- reconnaissance ou pas (505) du geste exécuté en fonction de ladite corrélation, les seules données représentatives du geste exécuté prises en compte étant lesdites données gyroscopiques ;
- transposition (506) de chaque geste reconnu en une commande d'interface utilisateur.

2. Procédé de reconnaissance de gestes selon la revendication 1, **caractérisé en ce que**, les données gyroscopiques reçues étant représentatives de mesures effectuées par le capteur gyroscopique entre deux actions détectées sur un bouton dudit instrument dédié, l'étape de réception de données gyroscopiques est suivie d'une étape de suppression (502) d'un nombre prédéfini de données gyroscopiques de début des mesures et/ou d'un nombre prédéfini de données gyroscopiques de fin des mesures.

3. Procédé de reconnaissance de gestes selon l'une quelconque des revendications 1 et 2, **caractérisé en ce qu'**il comporte une étape d'échantillonnage (503) par suppression équirépartie ou conservation équirépartie de données gyroscopiques parmi les données gyroscopiques reçues.

4. Procédé de reconnaissance de gestes selon l'une quelconque des revendications 1 à 3, **caractérisé en ce que** les données gyroscopiques relatives à l'apprentissage supervisé et préenregistrées dans la base de données correspondent à l'ensemble de gestes suivants :

- un geste horizontal vers la droite (401) ;
- un geste horizontal vers la gauche (402 ;
- un geste vertical vers le haut (403);
- un geste vertical vers le bas (404).

5. Procédé de reconnaissance de gestes selon la revendication 4, **caractérisé en ce que**, les données gyroscopiques reçues étant représentatives de mesures effectuées par le capteur gyroscopique selon trois axes d'un référentiel inertiel, il comporte une étape de normalisation (503) des données gyroscopiques reçues de telle sorte que :

- pour chaque donnée gyroscopique d'origine définie par rapport à un axe donné, la donnée gyroscopique normalisée est égale à ladite donnée gyroscopique d'origine moins la valeur minimale de l'ensemble des données gyroscopiques d'origine définies par rapport audit axe donné, le tout divisé par la valeur minimale de l'ensemble des données gyroscopiques d'origine définies par rapport audit axe donné moins la valeur minimale de l'ensemble des données gyroscopiques d'origine définies par rapport audit axe donné.

6. Procédé de reconnaissance de gestes selon la revendication 4, **caractérisé en ce que** l'ensemble de gestes comporte en outre :

- un geste correspondant à la reproduction de la lettre « V » (405) ;
- un geste circulaire en partant d'une position haute et en démarrant la rotation vers la gauche (406).

7. Procédé de reconnaissance de gestes selon la revendication 6, **caractérisé en ce que**, les données gyroscopiques reçues étant représentatives de mesures effectuées par le capteur gyroscopique selon trois axes d'un référentiel inertiel, il comporte une étape de normalisation (503) des données gyroscopiques reçues de telle sorte que :

- pour chaque donnée gyroscopique d'origine définie par rapport à un axe donné, la donnée gyroscopique normalisée est égale à ladite donnée gyroscopique d'origine moins la moyenne de l'ensemble des données gyroscopiques d'origine définies par rapport audit axe donné, le tout divisé par l'écart-type de l'ensemble des données gyroscopiques d'origine définies par rapport audit axe donné.

8. Dispositif (110) de reconnaissance de gestes comportant des moyens (210) de réception de données gyroscopiques représentatives d'un geste exécuté avec un instrument dédié (100) comportant un capteur gyroscopique, *caractérisé en ce qu'*il comporte en outre :

- des moyens (230), mis en oeuvre par un réseau de neurones artificiels comportant des neurones de sortie associés respectivement aux gestes que ledit dispositif est adapté à reconnaître, de détermination d'une corrélation entre les données gyroscopiques reçues et des données gyroscopiques relatives à un apprentissage supervisé et préenregistrées dans une base de données (240), le réseau de neurones artificiels étant adapté pour mettre en oeuvre une fonction d'activation de type sigmoïde et pour fournir, pour les données gyroscopiques reçues et pour chaque neurone de sortie, une probabilité que lesdites données gyroscopiques reçues correspondent au geste associé audit neurone de sortie ;

- des moyens (230) de reconnaissance ou pas du geste exécuté en fonction de ladite corrélation, les seules données représentatives du geste exécuté prises en compte étant lesdites données gyroscopiques ;

- des moyens (250) de transposition de chaque geste reconnu en une commande d'interface utilisateur.

**Patentansprüche**

1. Verfahren zur Erkennung von Gesten im Rahmen einer Benutzerschnittstellenkontrolle, wobei das genannte Verfahren durch eine Gestenerkennungsvorrichtung (110) umgesetzt wird, es einen Empfangsschritt (501) beinhaltet, der darin besteht, gyroskopische Daten zu empfangen, die für eine Geste repräsentativ sind, die mittels eines zweckgebundenen, einen Gyroskopsensor umfassenden Instruments ausgeführt wird, **dadurch gekennzeichnet, dass** die Gestenerkennungsvorrichtung ein künstliches neuronales Netzwerk beinhaltet, das Ausgangsneuronen umfasst, die jeweils den Gesten, zu deren Erkennung die genannte Vorrichtung geeignet ist, zugeordnet sind und dadurch, dass das Verfahren zudem die folgenden Schritte umfasst:

- Bestimmung einer Korrelation zwischen den empfangenen gyroskopischen Daten und den, sich auf ein überwachtes Lernen beziehenden und in einer Datenbank vorregistrierten gyroskopischen Daten durch das künstliche neuronale Netzwerk, wobei das künstliche neuronale Netzwerk eine sigmoide Aktivierungsfunktion umsetzt und für die empfangenen gyroskopischen Daten und jedes Ausgangsneuron eine Wahrscheinlichkeit liefert, derzufolge die genannten empfangenen gyroskopischen Daten der Geste entsprechen, die dem genannten Ausgangsneuron zugeordnet ist,

- Erkennung oder Nichterkennung (505) der, in Abhängigkeit von der genannten Korrelation ausgeführten Geste, wobei ausschließlich die genannten gyroskopischen Daten als für die ausgeführte Geste repräsentative Daten berücksichtigt werden,

- Umwandlung (506) jeder erkannten Geste in einen Benutzerschnittstellenbefehl.

2. Verfahren zur Erkennung von Gesten nach Patentanspruch 1, **dadurch gekennzeichnet, dass** auf den Schritt, der im Empfang der gyroskopischen Daten bestehent, aufgrund dessen, dass die empfangenen gyroskopischen Daten für Messungen repräsentativ sind, die von dem Gyroskopsensor zwischen zwei detektierten Betätigungen eines Knopfes des genannten zweckgebundenen Instruments durchgeführt wurden, ein Schritt des Löschens (502) einer vorbestimmten Anzahl an gyroskopischen Daten vom Beginn der Messungen und/oder einer vorbestimmten Anzahl an gyroskopischen Daten vom Ende der Messungen folgt.

3. Verfahren zur Erkennung von Gesten nach einem der Patentansprüche 1 und 2, **dadurch gekennzeichnet, dass** es einen Stichprobenschritt (503) beinhaltet, der in einer gleichverteilten Löschung oder gleichverteilten Aufbewahrung von gyroskopischen Daten aus den empfangenen gyroskopischen Daten besteht.

4. Verfahren zur Erkennung von Gesten nach einem der vorausgehenden Patentansprüche 1 bis 3, **dadurch gekennzeichnet, dass** die sich auf das überwachte Lernen beziehenden und in der Datenbank vorregistrierten gyroskopischen Daten der Gesamtheit folgender Gesten entsprechen:

- eine horizontale Geste nach rechts (401),
- eine horizontale Geste nach links (402),
- eine vertikale Geste nach oben (403),
- eine vertikale Geste nach unten (404).

5. Verfahren zur Erkennung von Gesten nach Patentanspruch 4, **dadurch gekennzeichnet, dass** es aufgrund dessen, dass die empfangenen gyroskopischen Daten für Messungen repräsentativ sind, die von dem Gyroskopsensor entlang dreier Achsen eines Trägheitsbezugsystems durchgeführt wurden, einen Normalisierungsschritt (503) beinhaltet, der darin besteht, die empfangenen gyroskopischen Daten so zu normalisieren, dass :

- für jedes, in Bezug auf eine gegebene Achse definierte gyroskopische Herkunftsdatum, das normalisierte gyroskopische Datum gleich dem genannten gyroskopischen Herkunftsdatum, abzüglich des Mindestwerts der Gesamtheit der, in Bezug auf die genannte gegebene Achse definierten gyroskopischen Herkunftsdaten, das Ganze geteilt durch den Mindestwert der Gesamtheit der, in Bezug auf die genannte gegebene Achse definierten gyroskopischen Herkunftsdaten, abzüglich des Mindestwerts der Gesamtheit der, in Bezug auf die genannte gegebene Achse definierten gyroskopischen Herkunftsdaten ist.

6. Verfahren zur Erkennung von Gesten nach Patentanspruch 4, **dadurch gekennzeichnet, dass** die Gesamtheit der Gesten zudem:

- eine Geste, die der Reproduktion des Buchstabens « V » entspricht (405),
- eine kreisförmige, von einer oberen Position ausgehende und die Drehung nach links beginnende Geste (406) beinhaltet.

7. Verfahren zur Erkennung von Gesten nach Patentanspruch 6, **dadurch gekennzeichnet, dass** es aufgrund dessen, dass die empfangenen gyroskopischen Daten für Messungen repräsentativ sind, die von dem Gyroskopsensor entlang dreier Achsen eines Trägheitsbezugssystems durchgeführt wurden, einen Normalisierungsschritt (503) beinhaltet, der darin besteht, die empfangenen gyroskopischen Daten so zu normalisieren, dass:

- für jedes, in Bezug auf eine gegebene Achse definierte gyroskopische Herkunftsdatum, das normalisierte gyroskopische Datum gleich dem genannten gyroskopischen Herkunftsdatum, abzüglich des Mittelwerts der Gesamtheit der, in Bezug auf die genannte gegebene Achse definierten gyroskopischen Herkunftsdaten, das Ganze geteilt durch die Standardabweichung der Gesamtheit der, in Bezug auf die genannte gegebene Achse definierten gyroskopischen Herkunftsdaten ist.

8. Vorrichtung (110) zur Erkennung von Gesten beinhaltend Mittel (210) zum Empfang von gyroskopischen Daten, die für eine, mittels eines zweckgebundenen, einen Gyroskopsensor umfassenden Instruments ausgeführte Geste repräsentativ sind, **dadurch gekennzeichnet, dass** sie zudem folgendes beinhaltet:

- von einem künstlichen neuronalen Netzwerk eingesetzte Mittel (230), die Ausgangsneuronen umfassen, die den jeweiligen Gesten, die die genannte Vorrichtung zu erkennen vermag, zugeordnet sind, zur Bestimmung einer Korrelation zwischen den empfangenen gyroskopischen Daten und den sich auf ein überwachtes Lernen beziehenden und in einer Datenbank (240) vorregistrierten gyroskopischen Daten, wobei das künstliche neuronale Netzwerk geeignet ist, eine sigmoide Aktivierungsfunktion umzusetzen, um für die genannten empfangenen gyroskopischen Daten und für jedes Ausgangsneuron eine Wahrscheinlichkeit zu liefern, derzufolge die genannten empfangenen gyroskopischen Daten der dem genannten Ausgangsneuron zugeordneten Geste entsprechen,
- Mittel (230) zur Erkennung oder Nichterkennung der in Abhängigkeit von der genannten Korrelation ausgeführten Geste, wobei ausschließlich die genannten gyroskopischen Daten als für die ausgeführte Geste repräsentative Daten berücksichtigt werden,
- Mittel (250) zur Umwandlung jeder erkannten Geste in einen Benutzerschnittstellenbefehl.

**Claims**

1. Method for recognizing gestures in the context of user interface control, said method being implemented by a gesture-recognition device (110), the method comprising a step (501) of receiving gyroscopic data representing a gesture executed with a dedicated instrument (100) comprising a gyroscopic sensor, **characterized in that** the gesture recognition device includes a network of artificial neurons comprising output neurons associated respectively with the gestures that said device is adapted for recognizing, and **in that** the method further comprises the following steps:

- determining, by the network of artificial neurons, a correlation (504) between the received gyroscopic data and gyroscopic data relating to a supervised learning and pre-recorded in a database, the network of artificial neurons implementing an activation function of the sigmoid type and, for the received gyroscopic data and for each output neuron, supplying a probability that said received gyroscopic data correspond to the gesture associated with said output neuron;
- recognizing or not (505) the executed gesture according to said correlation, the only data representing the executed gesture taken into account being said gyroscopic data;
- transposing (506) each recognized gesture into a user interface command.

2. Gesture-recognition method according to claim 1, **characterized in that**, the received gyroscopic data representing measurements made by the gyroscopic sensor between two actions detected on a button of said dedicated instrument, the gyroscopic-data reception step is followed by a step (502) of deleting a predefined number of gyroscopic data from the start of the measurements and/or a predefined number of gyroscopic data to the end of the measurements.

3. Gesture-recognition method according to any one of claims 1 and 2, **characterized in that** it comprises a step (503) of sampling by equally distributed deletion or equally distributed preservation of gyroscopic data among the received gyroscopic data.

4. Gesture-recognition method according to any one of claims 1 to 3, **characterized in that** the gyroscopic data relating to the supervised learning and pre-recorded in the database correspond to all the following gestures:

 - a horizontal gesture to the right (401);
 - a horizontal gesture to the left (402);
 - a vertical gesture upwards (403);
 - a vertical gesture downwards (404).

5. Gesture-recognition method according to claim 4, **characterized in that**, the gyroscopic data received representing measurements made by the gyroscopic sensor on three axes of an inertial reference frame, it comprises a step (503) of normalizing the received gyroscopic data so that:

 - for each original gyroscopic data item defined with respect to a given axis, the normalized gyroscopic data item is equal to said original gyroscopic data item minus the minimum value of all the original gyroscopic data defined with respect to said given axis, the whole divided by the minimum value of all the original gyroscopic data defined with respect to said given axis minus the minimum value of all the original gyroscopic data defined with respect to said given axis.

6. Gesture-recognition method according to claim 4, **characterized in that** the set of gestures further comprises:

 - a gesture corresponding to the reproduction of the letter "V" (405);
 - a circular gesture starting from a high position and beginning the rotation towards the left (406).

7. Gesture-recognition method according to claim 6, **characterized in that**, the received gyroscopic data representing measurements made by the gyroscopic sensor on three axes of an inertial reference frame, it comprises a step (503) of normalizing the received gyroscopic received so that:

 - for each original gyroscopic data item defined with respect to a given axis, the normalized gyroscopic data item is equal to said original gyroscopic data item minus the minimum value of all the original gyroscopic data defined with respect to said given axis, the whole divided by the minimum value of all the original gyroscopic data defined with respect to said given axis minus the mean of all the original gyroscopic data defined with respect to said given axis, the whole divided by the standard deviation of all the original gyroscopic data defined with respect to said given axis.

8. Gesture-recognition device (110) comprising means (210) for receiving gyroscopic data representing a gesture executed with a dedicated instrument (100) comprising a gyroscopic sensor, **characterized in that** it further comprises:

 - means (230), used by a network of artificial neurons comprising output neurons associated respectively with the gestures that said device is adapted for recognizing, for determining a correlation between the gyroscopic data received and gyroscopic data relating to a supervised learning and pre-recorded in a database (240), the network of artificial neurons being adapted for implementing an activation function of the sigmoid type and, for the gyroscopic data received and for each output neuron, supplying a probability that said received gyroscopic data correspond to the gesture associated with said output neuron;
 - means (230) for recognizing or not the executed gesture according to said correlation, the only data representing the executed gesture taken into account being said gyroscopic data;
 - means (250) for transposing each recognized gesture into a user interface command.

Fig. 1

Fig. 2

Fig. 3

401        402

403

404     405     406

## Fig. 4

```
┌─────────────────────────────────────┐
│  Réception de données gyroscopiques  │ 501
│       d'un geste enregistré          │
└─────────────────────────────────────┘
                  │
                  ▼
┌─────────────────────────────────────┐
│  Suppression des données de début et │ 502
│       de fin du geste enregistré     │
└─────────────────────────────────────┘
                  │
                  ▼
┌─────────────────────────────────────┐
│    Normalisation et/ou échantillonnage │ 503
└─────────────────────────────────────┘
                  │
                  ▼
┌─────────────────────────────────────┐
│     Corrélation par rapport à des    │ 504
│    données gyroscopiques de gestes   │
│            préenregistrées           │
└─────────────────────────────────────┘
                  │
                  ▼
┌─────────┐  non  ⟨─────────────────────⟩ 505
│  Erreur │◄──────⟨   Geste reconnu?     ⟩
└─────────┘       ⟨─────────────────────⟩
   507                    │ oui
                          ▼
              ┌─────────────────────────────┐
              │  Transposition en commande  │ 506
              │    d'interface utilisateur  │
              └─────────────────────────────┘
```

## Fig. 5